# EUROPÄISCHE PATENTSCHRIFT

(11) **EP 0 644 367 B1**
(45) Veröffentlichungstag und Bekanntmachung des Hinweises auf die Patenterteilung: **22.10.1997**
(21) Anmeldenummer: 94112746.6
(22) Anmeldetag: 16.08.1994
(51) Int. Cl.: F16L 59/02

(54) **Formkörper aus Kunststoff für Verbindungs- und Abzweigstellen wärmeisolierter Metallrohre**
Plastic article for joints and junction points for thermally insulated metal pipes
Pièce en matière plastique pour jonctions et points de dérivation de tuyaux métalliques isolés thermiquement

(30) Priorität: 17.09.1993 DE 9314094 U
(43) Veröffentlichungstag der Anmeldung: 22.03.1995
(73) Patentinhaber: KM Europa Metal Aktiengesellschaft, D-49023 Osnabrück (DE)
(72) Erfinder: Melcher, Walter, D-49545 Tecklenburg (DE)

(56) Entgegenhaltungen:
- DE-A- 3 300 443
- DE-U- 8 812 596
- DE-U- 9 216 011
- GB-A- 2 146 093
- GB-A- 2 219 838
- US-A- 3 191 632

## Beschreibung

Die Erfindung betrifft einen Formkörper aus Kunststoff für die nachträgliche Isolierung von Verbindungs- und Abzweigstellen werksseitig wärmeisolierter Metallrohre, insbesondere Stegmantelrohre.

Für die gesamte Hausinstallation, insbesondere für die Leitungssysteme von Warmwasserversorgungs- und Heizungsanlagen werden Kupferrohre mit einem werksseitig aufgebrachten Dämm- und Schutzmantel verwendet. Diese auf dem Markt erhältlichen Installationsrohre zeichnen sich durch eine besonders einfache Verlegung und durch relativ gute Wärmeisolationseigenschaften aus. Darüber hinaus wird mit der werksseitigen Ummantelung eine verminderte Kondenswasserbildung erreicht sowie die Schall- und Spannungsübertragung im Baukörper verringert. Zur Herstellung von Verbindungs-, Abzweig- oder Krümmungsstellen wird zunächst vor Ausführung der Lötarbeit ein Stück des werksseitig aufgebrachten Isoliermantels entfernt, die freiliegenden Rohrenden mit einem entsprechenden Fitting verlötet und anschließend die Verbindungsstelle nachisoliert.

Derartige von dem Isoliermantel freigelegte Verbindungsstellen wurden bisher durch Umwickeln mit geeigneten Materialien oder durch Auflegen von Kunststoff-Halbschalen, die nach der Montage miteinander verklebt wurden, bzw. von einer zusätzlichen Bandage umgeben wurden, nachisoliert. Während das Herstellen von Umwicklungen sehr zeitaufwendig und häufig sehr umständlich war, da in der Regel der Raum für die Wickelarbeit fehlte, ergab sich aus der Einführung von Halbschalen eine gewisse Arbeitsvereinfachung.

Nachteilig an den bisher verwendeten aus Halbschalen bestehenden Formkörpern ist jedoch, daß für nahezu jede Rohrabmessung angepaßte Formkörper lagermäßig bereitgehalten werden müssen. Hinzu kommt, daß die Formkörper anläßlich notwendiger Reparaturen oder Inspektionen bei der Demontage beschädigt wurden und dann zur Vermeidung von Wärmeverlusten erneuert werden mußten.

Die Aufgabe der vorliegenden Erfindung besteht darin, Formkörper aus Kunststoff zur Verfügung zu stellen, die in wirtschaftlicher Weise herstellbar und für mehrere Rohrabmessungen verwendbar sind. Ferner sollen die Formkörper sowohl einfach zu montieren als auch zu demontieren sein.

Diese Aufgabe wird bei einem Formkörper mit mindestens einer geschlitzten Hülse durch die Merkmale des Anspruchs 1 gelöst.

Weitere vorteilhafte Ausgestaltungen der Erfindung sind in den Unteransprüchen erfaßt.

Ein Formkörper mit diesen kennzeichnenden Merkmalen läßt sich äußerst wirtschaftlich fertigen. Er ist ferner leicht handhabbar und erlaubt auch unter schwierigen Raumbedingungen eine sichere und arbeitssparende Montage. Bei Bedarf läßt sich der Formkörper beschädigungsfrei demontieren, da bei der Montage keinerlei Klebstoffe oder selbstklebende Bandagen verwendet werden müssen.

Im folgenden wird die Erfindung anhand einer in den Zeichnungen beispielhaft dargestellten Ausführungsform noch näher erläutert.

Es zeigen:
- Fig. 1: in schematischer Darstellung eine T-förmige Abzweigstelle einer wärmeisolierten Rohrleitung mit vom Isoliermantel befreiten Bereichen;
- Fig. 2: die in Fig. 1 dargestellte Abzweigstelle mit aufgebrachtem T-förmigem Isolierkörper;
- Fig. 3: die in Fig. 2 dargestellte Abzweigstelle mit zusätzlichen spiralförmigen Hülsen;
- Fig. 4: einen Längsschnitt durch einen T-förmigen Isolierkörper;
- Fig. 5: die in Fig. 4 dargestellte Einzelheit "X" in vergrößertem Maßstab;
- Fig. 6: einen Teilschnitt entlang der in Fig. 4 dargestellten Linie I-I in vergrößertem Maßstab;
- Fig. 7: eine Hülse aus spiralförmig gewickeltem Kunststoffband in perspektivischer Ansicht.

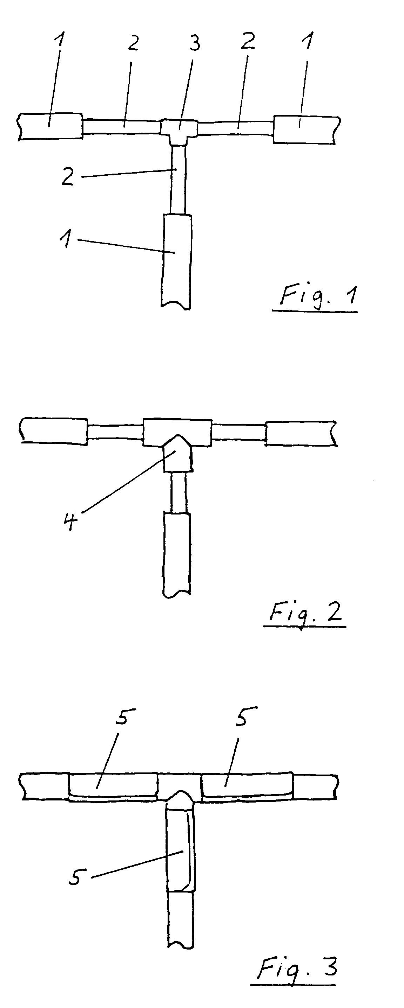

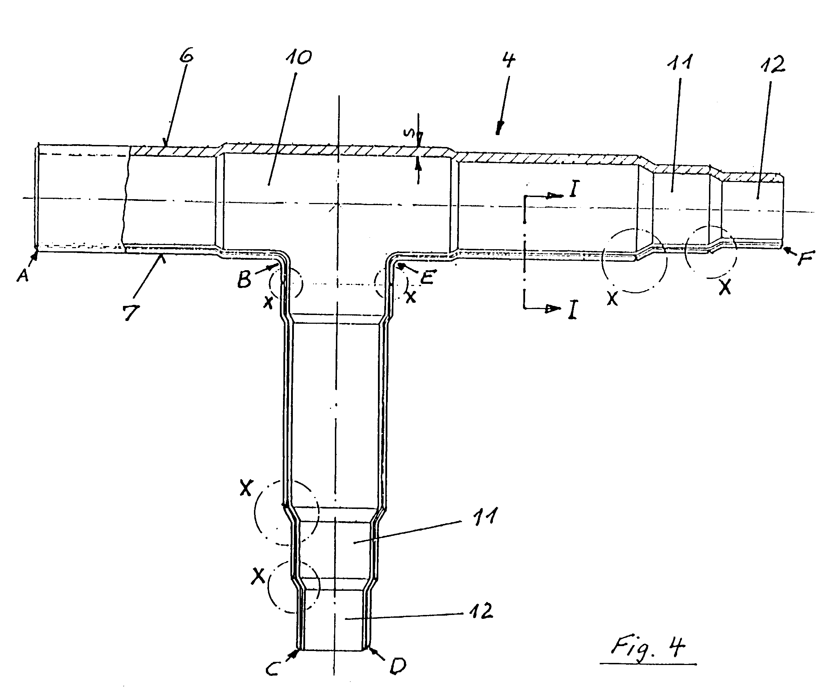

Mit 1 sind in der Fig. 1 wärmeisolierte Kupferrohre, beispielweise Stegmantelrohre bezeichnet, deren Ummantelung in den Bereichen 2 jeweils entfernt wurde, um eine Beschädigung des Mantelmaterials beim Verlöten mit einem T-förmigen Fitting 3 zu vermeiden. Nach Fertigstellung der Lötverbindung wird die Abzweigstelle mit einem T-förmigen elastisch aufklappbaren Form- oder Isolierkörper 4 aus Polyvinylchlorid ummantelt, dessen gestufte Ansätze und die Enden der wärmeisolierten Kupferrohre 1 mit einer etwa 3 bis 5 cm langen spiralförmig gewickelten Hülse 5 aus 0,3 bis 0,8 mm dickem Kunststoffband überdeckt werden, um den aufklappbaren Formkörper festzulegen und die Installation auch optisch einheitlich zu gestalten. Hierzu weisen der formangepaßte Isolierkörper 4 und die Hülse 5 vorzugsweise die gleiche Einfärbung auf wie das Mantelmaterial des wärmeisolierten Kupferrohrs 1.

Der Isolierkörper 4 ist aus einem Teil mit einer durchgehenden Wanddicke s von etwa 1,8 bis 2,4 mm geformt. Er Er kann entlang der durch die Punkte A-B-C-D-E-F festgelegten Trennlinie bzw. Trennfuge 7 aufgetrennt werden und ist daher über die Biegelinie 6 aufklappbar. Die Ausnehmung 10 des Isolierkörpers 4 dient zur Aufnahme des Fittings 3. Zur Anpassung an die jeweiligen Außendurchmesser des vom Isoliermantel befreiten Kupferrohrs sind am Isolierkörper 4 gestufte Abschnitte 11 und 12 vorgesehen, deren Durchmesser verringert sind. An den Übergängen von den Abschnitten 11 und 12 sind als Schneidhilfe umlaufende V-förmige Einkerbungen 13 eingeformt, die bei der Montage ein genaues Abschneiden, beispielsweise durch ein Messer, ermöglichen. Die Einkerbung 13 verringert die zu durchtrennende Wandung und bildet eine Führung für das Schneidmittel. Durch das Trennen des Isolierkörpers 4 an der Einkerbung 13 ist gewährleistet, daß die Wandung des Isolierkörpers 4 das blanke Kupferrohr im Bereich 2 möglichst eng umschließt und somit Wärmeverluste durch zu große Spalte gering gehalten werden können.

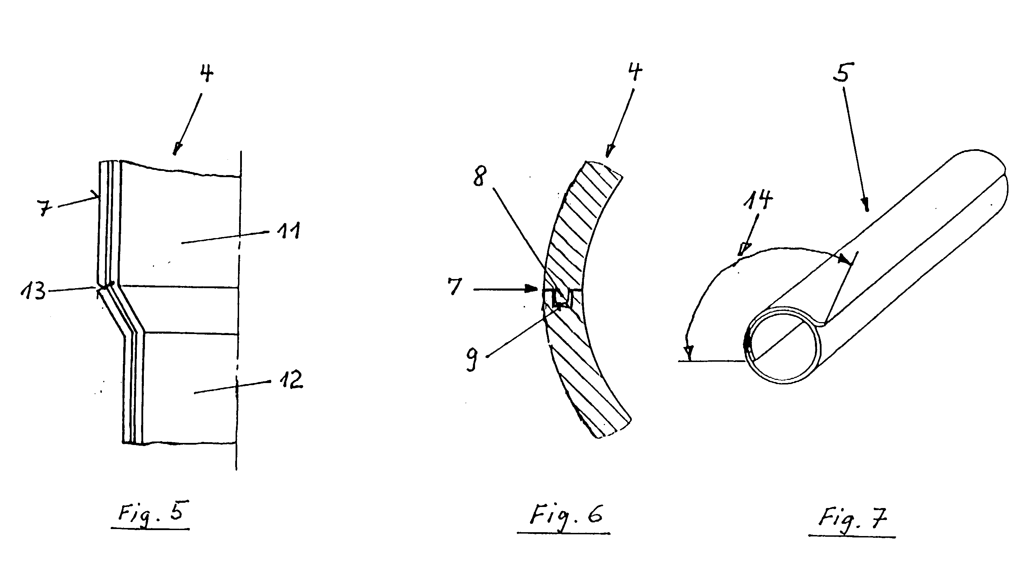

Die Ausbildung der aneinanderstoßenden Kanten des Isolierkörpers 4 entlang der Trennfuge 7 ist in Fig. 6 dargestellt. An der einen Seite ist eine längs der gesamten Trennfuge 7 verlaufende, mittig angeordnete Feder 8 angeformt, die zur Zentrierung der aneinanderstoßenden Kanten in die Nut 9 der gegenüberliegenden Seite eingreift.

Zur sicheren Fixierung des Isolierkörpers 4 einerseits und zur Abdeckung des vom Isolierkörper 4 nicht vollständig ummantelten Bereichs 2 andererseits wird eine aus spiralförmig gewickeltem oder extrudiertem Kunststoffband bestehende Hülse 5 verwendet. Diese schlitzförmige Hülse 5 kann vorzugsweise aus einem thermoplastischen Kunststoff hergestellt sein, der über besondere rückfedernde Eigenschaften verfügt. Zur Montage wird die Hülse 5, deren Bandüberlappung etwa 20% des abgewickelten Kunststoffbands beträgt, zumindest teilweise entgegen der Wickelrichtung aufgespreizt und kann dann derart über den Bereich 2 der Abzweigstelle gelegt werden, daß das Ende des wärmeisolierten Kupferrohrs 1 in die Überdeckung einbezogen wird. Nach der Aufbringung federt die Hülse 5 in ihre Ausgangsform zurück, wobei sie den Isolierkörper 4 fest aber im Bedarfsfall lösbar umschließt.

### Bezugszeichenaufstellung

- 1 -: Wärmeisoliertes Kupferrohr
- 2 -: Bereich
- 3 -: T-förmiger Fitting
- 4 -: T-förmiger Nachisolierkörper
- 5 -: Hülse
- 6 -: Biegelinie
- 7 -: Trennfuge
- 8 -: Feder
- 9 -: Nut
- 10 -: Ausnehmung für 3
- 11 -: Abschnitt mit Durchmesserabstufung
- 12 -: Abschnitt mit Durchmesserabstufung
- 13 -: Einkerbung
- 14 -: Überlappungsbereich

## Patentansprüche

1. Formkörper aus Kunststoff mit mindestens einer geschlitzten Hülse für die nachträgliche Isolierung von Verbindungs- und Abzweigstellen werksseitig wärmeisolierter Metallrohre wobei,
- der Formkörper (4) aus einem einteiligen, einseitig längsgeschlitzten Spritzgußteil besteht, dessen Trennfuge (7) in Achsrichtung des Metallrohrs verläuft,
- der Formkörper (4) aus einem weichen, elastischen thermoplastischen Kunststoff besteht,
- der Formkörper (4) an seinen Enden mindestens einen gestuften Ansatz (11,12) mit geringerem Durchmesser aufweist,
- die geschlitzte Hülse (5) aus einem spiralförmig gewickeltem Kunststoffband besteht, die nach der Montage den Formkörper (4) fest aber im Bedarfsfall lösbar umschließt.

2. Formkörper nach Anspruch 2, **dadurch gekennzeichnet,** daß die Trennfuge (7) in Art einer Nut/Feder-Verbindung (8,9) ausgebildet ist.

3. Formkörper nach Anspruch 1 oder 2, **dadurch gekennzeichnet,** daß im Übergangsbereich zu den Ansätzen (11,12) mit jeweils geringerem Durchmesser eine umlaufende im Querschnitt V-förmig ausgebildete Einkerbung (13) angeordnet ist.

4. Formkörper nach einem der Ansprüche 1 bis 3, **dadurch gekennzeichnet,** daß die Hülse (5) aus einem spiralförmigem Band aus Hart-Polyvinylchlorid besteht.

5. Formkörper nach einem der Ansprüche 1 bis 4, **dadurch gekennzeichnet,** daß der Überlappungsbereich (14) des spiralförmigen Kunststoffbands der Hülse (5) mindestens 20% der abgewickelten Bandlänge beträgt.

## Claims

1. Plastic moulding with at least one slit sleeve for subsequent insulation of connecting and branching points of metal pipes insulated thermally in production, whereby
- the moulding (4) consists of a one-piece injection moulding slit longitudinally on one side and whose dividing joint (7) runs in the axial direction of the metal pipe,
- the moulding (4) is made of a soft elastic thermoplastic,
- the moulding (4) exhibits at least one stepped shoulder (11, 12) of smaller diameter at its ends,
- the slit sleeve (5) is made of a plastic strip wound in a spiral which after fitment surrounds the moulding (4) securely but if necessary detachably.

2. Moulding according to claim 2, characterised in that the dividing joint (7) takes the form of a tongue and groove joint (8, 9).

3. Moulding according to claim 1 or 2, characterised in that a circumferential notch (13) of V-shaped cross-section is disposed in the junction area with the shoulders (11, 12) of in each case smaller diameter.

4. Moulding according to one of claims 1 to 3, characterised in that the sleeve (5) is made of a spiral strip of hard polyvinyl chloride.

5. Moulding according to one of claims 1 to 4, characterised in that the overlap portion (14) of the spiral plastic strip of the sleeve (5) is at least 20% of the unwound strip length.

## Revendications

1. Pièce moulée en matière plastique comportant au moins un manchon fendu pour isoler après installation des points de liaison et de dérivation de tuyaux métalliques à isolation thermique réalisés en usine,
selon lequel :
• la pièce moulée (4) se compose d'une pièce injectée en un seul morceau, fendu d'un côté longitudinalement, et dont la jonction (7) est dirigée selon l'axe du tuyau métallique,
• la pièce moulée (4) est en une matière thermoplastique élastique, souple,
• la pièce moulée (4) comporte, à ses extrémités, au moins un épaulement étagé (11, 12) de diamètre plus faible,
• le manchon fendu (5) est formé d'un ruban en matière plastique enroulé en spirale et qui entoure, après montage, la pièce moulée (4), de manière solide mais le cas échéant amovible.

2. Pièce moulée selon la revendication 1,
caractérisée en ce que
le joint (7) est réalisé en forme de liaison à rainures et nervures (8, 9).

3. Pièce moulée selon la revendication 1 ou 2,
caractérisée en ce que
dans la zone transitoire vers les épaulements (11, 12) de plus petit diamètre, respectifs, il est prévu une encoche périphérique (13) à section en forme de V.

4. Pièce moulée selon l'une des revendications 1 à 3,
caractérisée en ce que
le manchon (5) est un ruban en spirale en chlorure de polyvinyle dur.

5. Pièce moulée selon l'une des revendications 1 à 4,
caractérisée en ce que
la zone de chevauchement (14) du ruban en matière plastique, en forme de spirale, du manchon (5) correspond à au moins 20 % de la longueur dévidée du ruban.
